# EUROPÄISCHE PATENTSCHRIFT

(11) **EP 0 552 437 B1**
(45) Veröffentlichungstag und Bekanntmachung des Hinweises auf die Patenterteilung: **27.09.1995**
(21) Anmeldenummer: 92119665.5
(22) Anmeldetag: 19.11.1992
(51) Int. Cl.: B60R 19/18

(54) **Stossfänger für Fahrzeuge, insbesondere Kraftfahrzeuge**
Bumper for vehicles, especially motor vehicles
Pare-chocs pour véhicules, notamment véhicules motorisés

(30) Priorität: 24.01.1992 DE 4201839
(43) Veröffentlichungstag der Anmeldung: 28.07.1993
(73) Patentinhaber: Dr.Ing.h.c. F. Porsche Aktiengesellschaft, 70435 Stuttgart (DE)
(72) Erfinder: Vogelgesang, Harald-Werner, W-7131 Wurmberg (DE)

(56) Entgegenhaltungen:
- EP-A- 0 376 593
- EP-A- 0 502 648
- DE-A- 3 020 997
- DE-A- 3 330 397
- FR-A- 2 304 498

## Beschreibung

Die Erfindung bezieht sich auf Stoßfänger für Fahrzeuge, insbesondere Kraftfahrzeuge, gemäß dem Oberbegriff des Patentanspruchs 1.

Bei einem bekannten Fahrzeug der eingangs genannten Gattung (Porsche 911 Carrera 2 und 4) ist im Bugbereich und im Heckbereich jeweils ein Stoßfänger vorgesehen, der sich aus einem formsteifen Träger und einer vorgelagerten, den Endbereich des Aufbaues des Fahrzeuges bildenden elastischen Abdeckung zusammensetzt, wobei an dem durch ein Strangpreßprofil aus Leichtmetall (Aluminiumlegierung) gebildeten formsteifen Träger örtlich Prallhörner zur Überbrückung des Hohlraumes zwischen Träger und Abdeckung vorgesehen sind. Die aus Kunststoff bestehenden Prallhörner werden durch separat hergestellte Teile gebildet, die mit dem Träger in einem zusätzlichen Arbeitsgang durch Mieten, Schrauben oder dergleichen verbunden sind. Die Montage und Herstellung dieser eine gute Funktion aufweisenden Prallhörner verursachen einen erheblichen Zeit- und Kostenaufwand.

Aufgabe der Erfindung ist es, an einem gattungsgemäßen Stoßfänger den Zeit- und Kostenaufwand bei der Herstellung des Trägers und der Prallhörner zu reduzieren.

Erfindungsgemäß wird diese Augabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Integration der Prallhörner in den Träger eine erhebliche Zeit- und Kosteneinsparung bei der Herstellung des Trägers und der Prallhörner und ein verbessertes Recycling erzielt wird.

Die Prallhörner werden durch Streckziehen des Materials des Alu-Trägers gebildet, so daß die separate Herstellung der Prallhörner und die nachträgliche Montage entfallen kann.

Ein Ausführungsbeispiel der Erfindung ist in der Zeichnung dargestellt und wird im folgenden näher erläutert.

Es zeigt
- Fig. 1: eine perspektivische Ansicht eines hinteren Stoßfängers eines Fahrzeuges
- Fig. 2: einen Schnitt nach der Linie II-II der Fig. 1 in größerem Maßstab,
- Fig. 3: einen Schnitt nach der Linie III-III der Fig. 1 in größerem Maßstab,
- Fgi. 4: einen Schnitt nach der Linie IV-IV der Fig. 1 in größerem Maßstab.

Ein Stoßfänger 1 für ein Fahrzeug, insbesondere ein Kraftfahrzeug, umfaßt einen formsteifen Träger 2 und eine vorgelagerte, den Endbereich des Aufbaues des Fahrzeuges bildende elastische Abdeckung 3.

Der etwa U-förmig profilierte Träger 2 wird durch ein Strangpreßprofil aus Leichtmetall (Aluminiumlegierung) gebildet und ist über Abstützelemente 4 (Prallrohr, Pralldämpfer oder dergleichen) am nicht näher dargestellten Aufbau in Lage gehalten.

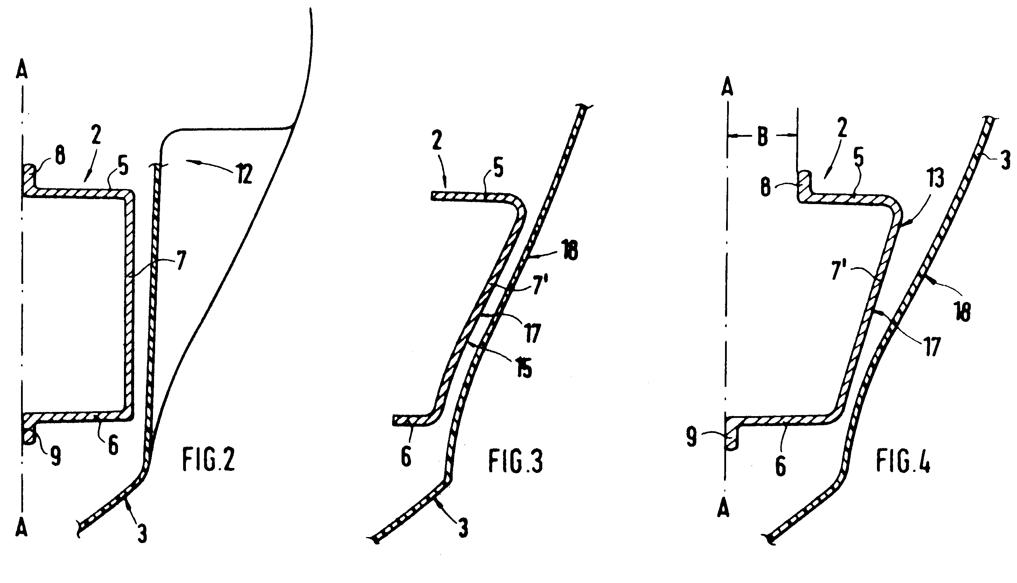

Gemäß Fig. 2 ist die offene Seite des U-förmigen Trägers 2 dem Aufbau zugekehrt, wobei die beiden etwa horizontal ausgerichteten Schenkel 5, 6 durch einen vertikalen Wandabschnitt 7 miteinander verbunden sind. Der Träger 2 weist in der Draufsicht gesehen einen gebogenen Formverlauf auf.

An den freien Enden der Schenkel 5, 6 sind vertikale Stege 8, 9 angeformt, wobei sich der dem Schenkel 5 zugeordnete Steg 8 nach oben hin erstreckt, während der dem Schenkel 6 zugeordnete Steg 9 nach unten hin gerichtet ist. Die dem Aufbau zugewandten Innenseiten der Stege 8, 9 liegen auf einer gemeinsamen vertikalen Ebene A-A (Fig. 2). Jedes Abstützelement 4 ist unter Vermittlung einer vertikalen Befestigungsschraube 10 entweder direkt mit dem Träger 2 oder mit einem Zwischenstück 11 des Trägers 2 verbunden. Das Zwischenstück 11 ist am Träger 2 durch Nieten, Schrauben oder dergleichen befestigt.

Die formbeständige, jedoch elastische Abdeckung 3 ist aus einem geeignetem Kunststoff, vorzugsweise einem Thermoplast, gefertigt und in bekannter Weise am angrenzenden Aufbau in Lage gehalten (z.B. durch Schrauben).

Die Abdeckung 3 ist seitlich bis zu benachbarten Radhäusern des Aufbaues herumgezogen und weist in einem mittleren Bereich ihrer Quererstreckung eine nischenförmige Einprägung 12 zur Aufnahme eines nicht näher dargestellten Nummernschildes auf.

Zur Erfüllung der gesetzlichen Forderungen bei einem Pendelschlag sind am Träger 2 beiderseits des Nummernschildes und zusätzlich an beiden seitlich außenliegenden Endbereichen Prallhörner 13, 14, 15, 16 vorgesehen, die den Raum zwischen dem Träger 2 und der mit Abstand zum Träger 2 verlaufenden Abdeckung 3 überbrücken.

Jedes Prallhorn 13, 14, 15, 16 ist einstückig mit dem formsteifen Träger 2 ausgebildet. Die Prallhörner 13, 14, 15, 16 werden durch Streckziehen des Materials des formsteifen Trägers gebildet.

Die Fertigung des Trägers mit den integrierten Prallhörnern 13, 14, 15, 16 erfolgt in der Weise, daß das Strangpreßprofil zunächst auf die gewünschte Länge abgeschnitten wird und daß danach das Biegen des Strangpreßprofils gemäß dem gewünschten bombierten Formverlauf (in der Draufsicht gesehen) erfolgt. Danach wird das Strangpreßprofil im Bereich der Prallhörner 13, 14, 15, 16 nachgedrückt.

Die Prallhörner 13, 14, 15, 16 stehen gegenüber den benachbarten Abschnitten des Trägers 2 vor, wobei die Prallhörner 13, 14, 15, 16 dem Formverlauf der vorgelagerten Abdeckung 3 angepaßt sind. Gemäß den Fig. 3 und 4 verläuft die der Abdeckung 3 zugekehrte Aufprallfläche 17 jedes Prallhornes 13, 14, 15, 16 etwa parallel zum benachbarten vorgelagerten Abschnitt 18 der Abdeckung 3, wobei ein Spalt zwischen Prallhorn 13, 14, 15, 16 und Abdeckung 3 vorgesehen ist.

Entsprechend den Fig. 3 und 4 weist die Abdeckung 3 im Bereich der Prallhörner 13, 14, 15, 16 einen schrägen Verlauf auf, der sich von unten innen nach oben außen erstreckt (Abschnitt 18).

Dementsprechend überragt ein oberer Endbereich des Prallhornes 13, 14, 15, 16 einen unteren Endbereich des Prallhornes 13, 14, 15, 16 in Längsrichtung gesehen (Versatz B zur Ebene A-A).

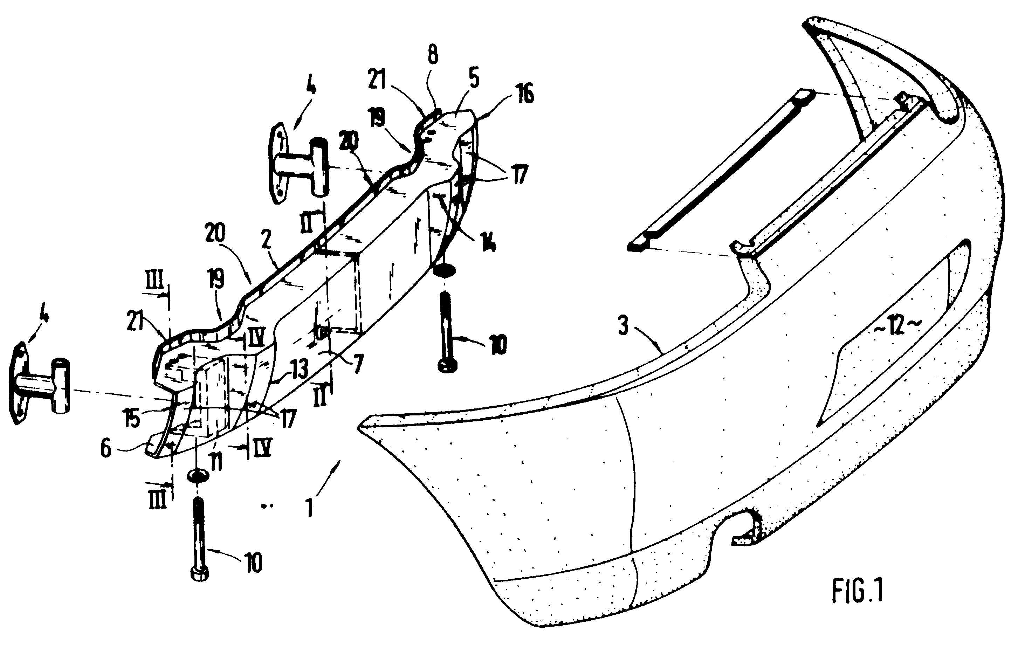

Aus Fig.1 geht hervor, daß der untere Schenkel 6 des Trägers 2 in seiner ursprünglichen Form nach dem Biegen verbleibt, wogegen der obere Schenkel 5 im Bereich der Prallhörner 13, 14, 15, 16 nach außen hin verschoben wird, so daß in der Draufsicht gesehen ein bogenförmiger oder wannenförmiger Übergang 19 zu angrenzenden Abschnitten 20, 21 des Trägers 2 entsteht.

Es besteht aber auch die Möglichkeit, daß die Aufprallfläche 17 des Prallhornes 13, 14, 15, 16 parallel zum ursprünglichen vertikalen Wandabschnitt 7 verläuft, wobei die Aufprallfläche 17 gegenüber dem Wandabschnitt 7 vorsteht.

Ferner kann die Aufprallfläche 17 auch schräg von oben innen nach unten außen verlaufen, falls die Abdeckung 3 einen solchen Formverlauf aufweist.

Es besteht auch die Möglichkeit, bei einem Träger 2 mit geschlossenem Hohlprofil die Rückwand des Trägers 2 örtlich freizuschneiden und sodann das Profil nachzudrücken, um ein integriertes Prallhorn 13, 14, 15, 16 wie beim dargestellten Ausführungsbeispiel zu erzielen.

## Patentansprüche

1. Stoßfänger (1) für Fahrzeuge, insbesondere Kraftfahrzeuge, der einen zumindest abschnittsweise etwa U-förmig profilierten formsteifen Träger (2) aus Leichtmetall und eine vorgelagerte, den Endbereich des Aufbaues des Fahrzeuges bildende elastische Abdeckung (3) umfaßt, wobei am formsteifen Träger (2) örtlich Prallhörner angeordnet sind, **dadurch gekennzeichnet,** daß die Prallhörner (13, 14, 15, 16) einstückig mit dem formsteifen Träger (2) ausgebildet sind.

2. Stoßfänger nach Anspruch 1, **dadurch gekennzeichnet,** daß die Prallhörner (13, 14, 15, 16) durch Streckziehen des Materials des formsteifen Trägers (2) gebildet werden.

3. Stoßfänger nach Anspruch 1, **dadurch gekennzeichnet,** daß die Aufprallfläche (17) der Prallhörner (13, 14, 15, 16) - in Höhenrichtung gesehen - annähernd dem Formverlauf der vorgelagerten Abdeckung (3) angepaßt ist.

4. Stoßfänger nach Anspruch 1, **dadurch gekennzeichnet,** daß beiderseits eines Nummernschildes am Träger (2) Prallhörner (13, 14) ausgebildet sind.

5. Stoßfänger nach Anspruch 1, **dadurch gekennzeichnet,** daß an beiden freien Enden des Trägers (2) weitere einstückig mit dem Träger (2) ausgebildete Prallhörner (15, 16) vorgesehen sind.

## Claims

1. A bumper (1) for vehicles, in particular motor vehicles, comprising a rigid-shaped carrier (2) substantially U-shaped in section at least in portions and made of light metal, and a resilient covering (3) mounted thereon and forming the end region of the vehicle body, impact projections being arranged locally on the rigid-shaped carrier (2), characterised in that the impact projections (13, 14, 15, 16) are formed in one piece with the rigid-shaped carrier (2).

2. A bumper according to claim 1, characterised in that the impact projections (13, 14, 15, 16) are formed by stretch-forming the material of the rigid-shaped carrier (2).

3. A bumper according to claim 1, characterised in that the impact surface (17) of the impact projections (13, 14, 15, 16) - viewed in the vertical direction - substantially conforms to the shape of the covering (3) mounted thereon.

4. A bumper according to claim 1, characterised in that impact projections (13, 14) are formed on the carrier (2) on either side of a number plate.

5. A bumper according to claim 1, characterised in that further impact projections (15, 16), formed in one piece with the carrier (2), are provided at both free ends of the carrier (2).

## Revendications

1. Pare-chocs (1) pour véhicule, en particulier véhicule automobile, qui comporte un support (2) de forme rigide, en métal léger, profilé en U au moins sur certaines portions et une couverture (3) élastique placée devant, formant la zone d'extrémité de la carrosserie du véhicule, des cornes d'impact étant placées localement sur le support (2) rigide, caractérisé en ce que les cornes d'impact (13, 14, 15, 16) sont réalisées d'une seule pièce avec le support (2) rigide.

2. Pare-chocs selon la revendication 1, caractérisé en ce que les cornes d'impact (13, 14, 15, 16) sont formées par étirage du matériau du support rigide (2).

3. Pare-chocs sel on la revendication 1, caractérisé en ce que la surface d'impact (17) des cornes d'impact (13, 14, 15, 16), - vue dans le sens de la hauteur - est approximativement adaptée à la forme de la couverture (3) placée devant.

4. Pare-chocs selon la revendication 1, caractérisé en ce que des cornes d'impact (13, 14) sont formées des deux côtés d'une plaque d'immatriculation, sur le support (2).

5. Pare-chocs selon la revendication 1, caractérisé en ce que d'autres cornes d'impact (15, 16), formées d'une seule pièce avec le support (2), sont prévues aux deux extrémités libres du support (2).
